(19) Europäisches Patentamt
European Patent Office
Office européen des brevets

(11) EP 2 785 526 B1

(12) **EUROPEAN PATENT SPECIFICATION**

(45) Date of publication and mention
of the grant of the patent:
**08.03.2017 Bulletin 2017/10**

(51) Int Cl.:
***B32B 27/08*** (2006.01)   ***B32B 7/02*** (2006.01)
***B32B 27/32*** (2006.01)   ***C08L 23/08*** (2006.01)
***C08L 23/14*** (2006.01)

(21) Application number: **12787232.3**

(22) Date of filing: **23.10.2012**

(86) International application number:
**PCT/US2012/061418**

(87) International publication number:
**WO 2013/081742 (06.06.2013 Gazette 2013/23)**

(54) **MULTILAYER FILM AND METHOD OF MAKING SAME**

MEHRLAGIGER FILM UND VERFAHREN ZU DESSEN HERSTELLUNG

FILM MULTICOUCHE ET PROCÉDÉ DE FABRICATION DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2011 US 201161566142 P**

(43) Date of publication of application:
**08.10.2014 Bulletin 2014/41**

(73) Proprietor: **ExxonMobil Chemical Patents Inc.**
**Baytown, TX 77520 (US)**

(72) Inventors:
• **VINCK, Michael, J.**
**B-9280 Lebbeke (BE)**
• **JOLY, Anne-Marie**
**B-2223 Schriek (BE)**
• **BASTIAENS, Mario**
**B-3150 Haacht (BE)**
• **DEWAEL, Petra**
**B-1745 Opwijk (BE)**
• **OHLSSON, Stefan, Bertil**
**B-3140 Keerbergen (BE)**

(74) Representative: **ExxonMobil Chemical Europe Inc.**
**et al**
**IP Law Europe**
**Hermeslaan 2**
**1831 Machelen (BE)**

(56) References cited:
**US-A1- 2004 116 607    US-B2- 7 790 281**

**Description**

## BACKGROUND

Silage stretch film, cling film, blown stretch, and surface protective films preferably include a layer which is intended to stick to itself or another object such as glass, metal, plastic sheeting, or the like to protect the substrate from mild mechanical damage, dust, and moisture. The level of tack must be high enough to allow the film to releasably adhere to the article being wrapped and to itself, while low enough to allow the wrap to be removed from the article, or removed from a roll containing the wrap.

Low molecular weight polymers, particularly $C_4$-$C_{10}$-based polymers such as polyisobutylene polymers and copolymers (i.e., PIBs) have been used in the surface layers of films to control the level of tackiness. But films including such polymers tend to be excessively noisy when unwound from a film-roll when utilized on a high speed wrapping machine. Such polymers also tend to migrate out of the polymer (i.e., bloom) over time or at common storage temperatures. Thus, films including such polymers typically need to be stored for a period of time in a heated environment in order to stabilize.

## SUMMARY

Embodiments of the invention intend to provide a solution to the films described above. Thus, the invention provides a film suitable for use as a stretch wrap film, cling film or surface protective film comprising an outer layer A in surface contact with a core layer, wherein the outer layer A comprises a plastomer and from 1.0 to 25.0 wt% of a propylene-based elastomer, wherein the outer layer A contains no more than 0.1 wt.% of a $C_4$-$C_{10}$-based polymer having an Mw < about $5.00 \times 10^4$ g/mol, and wherein the core layer comprises at least 50 wt% of a polyethylene. Preferred plastomers comprise an ethylene-based plastomer comprising about 87 mol.% to about 97.5 mol.% of polymer units derived from ethylene and about 13 mol.% to about 2.5 mol.% of polymer units derived from an alpha-olefin having a density of from 0.86 g/cm$^3$ to 0.910 g/cm$^3$, an Mw $\geq$ 70,000 to < 130,000, and a heat of fusion of greater than 75 J/g as determined by differential scanning calorimetry.

In another aspect, the invention provides a method of wrapping an article comprising: attaching an end of a film from a film-roll to the article; unwinding the film from the film-roll at a rate from 1 to 400 m/min.; and wrapping the article with the film, wherein the total noise associated with unwinding the film is < $9.0 \times 10^1$ dB, wherein the film is a film suitable for use as a stretch wrap film, cling film or surface protective film as described above.

## BRIEF DESCRIPTION OF THE FIGURES

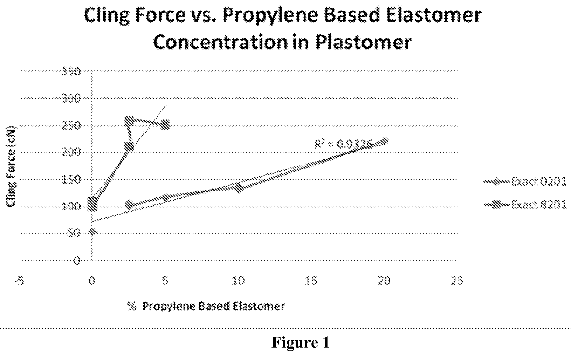

Figure 1 is a graphical representation showing the cling force vs. the propylene-based elastomer concentration in the plastomer, according to an embodiment.

## DETAILED DESCRIPTION

Some applications of the present invention relate to blown films suitable for use as a stretch wrap, including an agricultural wrap. Some films are multilayer blown films comprising a core layer and an outer layer A, wherein outer layer A in some embodiments is suitable for use as outer layer A.

Throughout the entire specification, including the claims, the following terms shall have the indicated meanings.

Polymer may be used to refer to homopolymers, copolymers, interpolymers, terpolymers, etc. Likewise, a copolymer may refer to a polymer comprising at least two monomers, optionally with other monomers. All molecular weights are weight average (Mw) unless otherwise noted.

When a polymer is referred to as comprising a monomer, the monomer is present in the polymer in the polymerized form of the monomer or in the derivative form of the monomer. However, for ease of reference, the phrase "comprising the (respective) monomer" or the like is used as shorthand. Likewise, when catalyst components are described as comprising neutral stable forms of the components, it is well understood by one skilled in the art, that the active form of the component is the form that reacts with the monomers to produce polymers.

Isoolefin refers to any olefin monomer having two substitutions on the same carbon.

Elastomer or elastomers as used herein, refers to any polymer or composition of polymers consistent with the ASTM D-1566 definition. The terms may be used interchangeably with the term "rubber(s)."

The term "film" of the invention typically refers to blown films having multiple layers (multilayer films). When used in multilayer films, the various polyolefin resins described herein can be used in any layer of the film, or in more than one layer of the film, as desired. When more than one layer of the film is formed, each layer can be individually formulated; i.e., the layers formed of or including the polyethylene resin can have the same or different chemical composition, density, melt index, thickness, etc., depending upon the desired properties of the film.

To facilitate discussion of different film structures of the invention, the following notation is used herein. Each layer of a film is denoted "A" or "B", where "A" indicates a conventional film layer, and "B" indicates a different film layer. Where a film includes more than one A layer or more than one B layer, one or more prime symbols (', ", '", etc.) are appended to the A or B symbol to indicate layers of the same type (conventional or inventive) that can be the same or can differ in one or more properties, such as chemical composition, density, melt index, thickness, and the like, within the range of the parameters defined herein. Finally, the symbols for adjacent layers are separated by a slash (/). Using this notation, a three-layer film having an inner layer, which is also referred to herein as a "core layer" disposed between two outer film layers, the layers would be denoted A/B/A'. Similarly, a five-layer film of alternating layers would be denoted A/B/A'/B'/A". Unless otherwise indicated, the left-to-right or right-to-left order of layers does not matter, nor does the order of prime symbols; e.g., an A/B film is equivalent to a B/A film, and an A/A'/B/A" film is equivalent to an A/B/A'/A" film, for purposes of the present invention. The relative thickness of each film layer is similarly denoted, with the thickness of each layer relative to a total film thickness of 100 (dimensionless) is indicated numerically and separated by slashes; e.g., the thickness of an A/B/A' film having A and A' layers of 10 microns each and a B layer of 30 microns is denoted as 20/60/20.

As used herein, the term "core layer" is a central layer of the film. The term "outer layer A" is the layer disposed on one side of the core layer, either directly or with other layers disposed between the core layer and the outer layer A, which provides the film with adhesion to itself, or to an article. The term "anti-cling" layer refers to a layer disposed on a side of the core layer directly opposite the side of the outer layer A. Consistent with the outer layer A, the outer layer B, when present, may be disposed directly on the core layer, or other layers may be disposed between the core layer and the outer layer B. The outer layer B provides a lesser amount of adhesion to the outer layer A such that the film may be unrolled from a spool or other type roll without undue force or without the film breaking during the unrolling process.

$C_4$-$C_{10}$-based polymers comprise > 50.0 wt.%, preferably > 85.0 wt.% polymer or oligomer units derived from at least one $C_4$-$C_{10}$ olefin. Some such $C_4$-$C_{10}$-based polymers are oligomers of $C_4$-$C_{10}$ olefins and/or comprise > 5.0 wt.%, particularly > 4.0 wt.%, > 3.0 wt.%, > 2.0 wt.%, > 1.0 wt.%, > 0.1 wt.%, units derived from ethylene and/or propylene. Examples include $C_4$ olefins which include n-butene, 2-butene, isobutylene, butadiene, and mixtures thereof. Such materials may also be referred to as "polybutene" liquids (or "polybutenes") when the oligomers comprise isobutylene and/or 1-butene and/or 2-butene, which are commonly used as additives for polyolefins to introduce tack or as a processing aid. The ratio of $C_4$ olefin isomers can vary by manufacturer and by grade, and the material may or may not be hydrogenated after synthesis. Commercial sources of such $C_4$-$C_{10}$-based polymer having an Mw < about $5.00 \times 10^4$ g/mol. include BP (Indopol grades) and Infineum (C-Series grades). When the $C_4$ olefin is exclusively isobutylene, the material may be referred to as "polyisobutylene" or PIB. Commercial sources of PIB include Texas Petrochemical (TPC Enhanced PIB grades). When the $C_4$ olefin is exclusively 1-butene, the material is referred to as "poly-n-butene" or PNB.

The term "blown film" may include uniaxially, biaxially, and un-oriented multilayer films. Orientation in the direction of extrusion is known as machine direction (MD) orientation. Orientation perpendicular to the direction of extrusion is known as transverse direction (TD) orientation. The film may be oriented to the same or different extent in each direction. Orientation may be accomplished by stretching a film first in the MD followed by TD orientation, by stretching in the TD followed by stretching in the MD, or by stretching in both MD and TD simultaneously.

In an embodiment of the invention, the film may be produced using machine direction orientation (MDO). In an MDO process, the film is stretched at a temperature below its melting temperature in order to induce an orientation therein. In an embodiment of the invention, the film can be produced using MDO for annealing purposes.

In an embodiment of the invention, the film is drawn by a pull roll and threaded through a multiple roll MDO stage which may include pre-heat rolls, various stretching stages with or without annealing rolls between stages, one or more conditioning and annealing rolls, and one or more chill rolls. All rolls may be individually driven and temperature controlled. Stretching of the film in the MDO stage is accomplished by inducing a speed differential between two or more adjacent rolls.

In an embodiment of the invention, the films can be tailored to specific applications by adjusting the thickness, materials, and order of the various layers, as well as the additives in each layer.

Additives can be provided in the various film layers, as is well-known in the art.

As used herein, the term "peel cling" is determined according to ASTM D-5458, or an equivalent thereof.

In general, the term "natural draw ratio" refers to the stress elongation curve of a film in a region wherein the slope transitions between the slope of the yield plateau region and the slope of the strain hardening region, wherein the natural draw ratio is defined by the intersection between a line drawn through a linear portion of the strain hardening region and a line drawn through a linear portion of the yield plateau region of a film. For purposes herein, the natural draw ratio is determined from a stress-elongation measurement according to ASTM D-882, as the elongation at the intersection of a line drawn through a linear portion of the strain hardening region and a line drawn through a linear portion of the yield plateau region. The lines are calculated as linear regression fits to the data in the linear portions of the curves. The specific range of data points subjected to the linear regression analysis can be chosen by changing the lower elongation limit in steps of, for example, 5%, keeping the overall range constant at, for example, 50% (e.g., 50%-100%, 55%-105%, 60%-110%, etc.), and looking for the range which gives the lowest sum of squared differences between predicted and actual data.

As used herein, the "noise associated with wrapping an article" refers to the noise above ambient conditions, produced as a stretch wrap film unrolls during the wrapping process of an article at the specified linear rate. The noise produced does not include the noise produced by the wrapping machine, but only refers to the noise produced as the film is unwound from the roll. The total noise associated with wrapping an article includes the ambient noise.

The term "agricultural film" includes silage film, designed to maintain the nutritional value of forage plants such as corn, vegetables, and grasses that continue to respire after cutting. In general, silage films exclude the air so lactic acid fermentation can take place, leaving a feed rich in vitamins and carotene. As is common in the art, silage films include those films which may used to protect feed sources for several months under a variety of conditions.

As used herein, the term "post-blowing thermal history" refers to the temperature at which a film may be maintained after being produced. This term includes the "thermal conditioning" and other processes wherein a film may be maintained at or above a particular temperature for a period of time to influence various properties of the film. The term does not refer to spurious temperatures experienced by a film, e.g., during shipping, packaging, or the like, which are not necessarily intended to produce a particular outcome or enhance a particular property of the film.

**Films**

**Outer layer A**

In embodiments of the invention, outer layer A is in surface contact with a first side of a core layer, and polyolefin polymer fractions having an Mw < about $5.00 \times 10^4$ g/mol. therein comprise < 0.1 wt.% of the outer layer A. In particular embodiments of the invention, the outer layer A generally includes < 0.05 wt.%, < 0.01 wt.%, or 0 wt.% of a $C_4$-$C_{10}$-based polymer having an Mw < about $5.00 \times 10^4$ g/mol., particularly where the outer layer A has a higher tackiness than optional outer layer B. In this regard where the specification indicates that the outer layer A generally includes less than a certain amount of polyolefin polymer fractions or $C_4$-$C_{10}$-based polymer, this is not meant to indicate that such polymer fractions or $C_4$-$C_{10}$-based polymer is or must be present. Indeed, it is preferred that the content of low molecular weight polymer fractions, including $C_4$-$C_{10}$-based polymers having an Mw < about $5.00 \times 10^4$ g/mol. be minimized. Thus, some outer layers A are essentially free of $C_4$-$C_{10}$-based polymers having an Mw < about $5.00 \times 10^4$ g/mol. (i.e., a $C_4$-$C_{10}$-based polymer having an Mw < about $5.00 \times 10^4$ g/mol. is not intentionally added to the layer A, or that polyolefin polymer fractions having an Mw < about $5.00 \times 10^4$ g/mol. are present in trace quantities indicative of impurity concentrations).

Outer layer A typically includes at least 40.0 wt.%, preferably > 50.0 wt.%, ≥ 60.0 wt.%, ≥ 70.0 wt.%, more preferably ≥ 75.0 wt.%, ≥ 80.0 wt.%, ≥ 90.0 wt.%, or ≥ 95.0 wt.%, based on the total weight of outer layer A, of an ethylene polymer having a density of more than 0.86 g/cm$^3$ to less than 0.910 g/cm$^3$, preferably from 0.88 to 0.905 g/cm$^3$, more preferably from 0.870 g/cm$^3$ to 0.890 g/cm$^3$ (i.e., an ethylene-based plastomer). Such ethylene-based plastomers comprise about 87 mol.% to about 97.5 mol.% of polymer units derived from ethylene and about 13 mol.% to about 2.5 mol.% of polymer units derived from an alpha-olefin comonomer. Such ethylene-based plastomers are typically characterized as having a CDBI > 60, preferably > 80, and more preferably > 90, fractions having an Mw below 15,000 are ignored when determining CDBI ("CDBI" being defined as the weight percent of the ethylene interpolymer molecules having a comonomer content within 50% of the median total molar comonomer content as is described in PCT Publication No. WO93/03093, as well as in Wild et al., J. Poly. Sci., Poly. Phys. Ed., Vol. 20, p. 441 (1982) and U.S. Patent No. 5,008,204). Preferred plastomers are also characterized by a DSC melting point curve that exhibits the occurrence of a single melting point peak occurring in the region of 50°C to 110°C (second melt rundown) and may have a Mw ≥ 70,000 to < 130,000. Such plastomers have a heat of fusion of greater than 75 J/g as determined by differential scanning calorimetry, preferably less than 130.0 J/g, 125.0 J/g, 120.0 J/g, 110.0 J/g, or 100.0 J/g.

More preferred plastomers also have a molecular weight distribution (Mw/Mn) value ≤ 4.0, preferably from 1.1 to 3.5. Some preferred ethylene-based plastomers have a 1% secant modulus < about $1.5 \times 10^4$ psi (10343 N/cm$^2$) and as low as about $8 \times 10^2$ psi (552 N/cm$^2$) or even less. Examples include ethylene-octene; ethylene-hexene; and/or ethylene-butene polymers sold under the trade name EXACT ™ (Available from ExxonMobil Chemical Company).

The outer layer A includes a propylene-based elastomer in an amount of 1.0 to 25.0 wt.%, preferably 2.0 to 20.0 wt.%. As used herein, the term "propylene-based elastomer" includes a random propylene polymer which may comprise a propylene-based elastomeric polymer, produced by random polymerization processes leading to polymers having randomly distributed irregularities in stereoregular propylene propagation. This is in contrast to block copolymers in which constituent parts of the same polymer chains are separately and sequentially polymerized. The term may further indicate that the heat of fusion of the polymer as determined by DSC is less than 75 J/g. Generally, then the melting point as determined by DSC will be below 105°C. This is in contrast to propylene copolymers or atactic polymers containing propylene-derived units, which lack recovery from elastic deformation. The random propylene polymer is "propylene-based" in the sense that the amount of propylene in the polymer is sufficient for propylene sequences to crystallize to provide a detectable heat of fusion. This is in contrast with known elastomeric polymers based on ethylene and propylene in which the heat of fusion can be attributed to ethylene derived polymer sequences. Preferably, the propylene-based elastomers contain isotactic propylene sequences, separated by stereo- or region-error, or by one or more comonomer units. Preferably, the propylene-based elastomers include at least some comonomer, such as an alpha-olefin, in order to facilitate control of the structure. Preferably the comonomer comprises substantially ethylene, which can aid in achieving economic polymerization conditions by raising the molecular weight and/or permitting an increase of the polymerization temperature. Preferred propylene-based elastomers are available from ExxonMobil Chemical Company under the trade name VISTMAXX™ propylene-based elastomers. These and other suitable propylene-based elastomers are described in U.S. Patent Nos. 6,525,157; 6,982,310; 6,992,158; 6,569,965; 6,573,350; 6,992,159; 7,053,164; 7,056,982; 7,056,992; and 6,635,715. VERSIFY elastomers available from Dow Chemical Company and TAFMER™ elastomers available from Mitsui Chemicals including those disclosed in U.S. Patent No. 7,790,281 are also suitable.

Typically the films of the invention including plastomer in the outer layer A are used in applications benefiting from a relatively high tackiness in the layer. Some such films include temporary surface protection films, e.g., for temporarily protecting surfaces of vulnerable materials such as plastics, metals and ceramics in the course of manufacture, storage and transportation.

It has also been discovered that addition of propylene-based elastomer to the outer layer A enhances the peel cling force of the film. In an embodiment of the invention, the outer layer A including a propylene-based elastomer provides a film having a peel cling force of about 80 cN to about 150 cN; as determined according to ASTM D-5458; preferably a peel cling force $\geq$ about 90 cN; preferably greater than or equal to about 100 cN; preferably greater than or equal to about 110 cN, preferably greater than or equal to about 120 cN.

In some cases tackifying additives may be added in small amounts. These are defined herein as substances which provide sticky or adhesive qualities to copolymers, surfaces, films, or articles. Compressor oils and processing stabilizers such as antioxidants, UV stabilizers, antiblock agents, and the like are excluded from this definition. Compatible tackifying additives, if used, would be those which are miscible, or form homogeneous blends, with the polymers of the cling layer at conditions of fabrication and use. A wide variety of tackifying additives are known in the art and include, for example, polybutenes, polyisobutylenes, atactic polypropylenes, terpene resins, aliphatic and aromatic hydrocarbon resins, alkali metal and glycerol stearates, and hydrogenated resins. In one embodiment, the surface layer of the film comprises from 2 wt.% to 25 wt.% of a hydrocarbon tackifier grafted to incorporate polar moieties and preferably grafted with maleic anhydride. For more details on tackifiers, see U.S. Patent Nos. 5,114,763; 5,154,981; 5,173,343; and 5,175,049. Notwithstanding this definition of tackifiers, an object of this invention is to provide a means of generally obtaining a film where the adhesive effect is achieved with a minimal use of either an ethylene non-acrylate copolymer or added tackifier.

In an embodiment of the invention, the films may be "essentially free of tackifying additives," which can be defined as being less than 0.1 wt.% tackifier.

## Core Layer

According to the invention, the core layer comprises one or more polyethylene homopolymers or copolymers. Some suitable such polyethylenes include low density polyethylenes (LDPEs) and linear low density polyethylenes as described below.

LDPE may be obtained from ethylene by polymerization using free-radical initiators under high pressure conditions. Accordingly, LDPE may also be referred to in the art as high pressure polyethylene (HPPE). LDPE is defined for use herein to include heterogeneously branched polymers comprising at least 85 mol.% of units derived from ethylene which is heterogeneously branched and contains less than 7.5 mol.% of units derived from comonomers containing polar moieties such as a carbonyl group, including ethylenically unsaturated esters, e.g., vinyl acetate, ethylene methyl acrylate, ethylene methacrylic acid, or ethylene n-butyl acrylate, particularly vinyl acetate. Some suitable LDPEs have a density of from 0.910 g/cm$^3$ to 0.940 g/cm$^3$, particularly 0.915 g/cm$^3$ to 0.930 g/cm$^3$, although LDPEs having densities above and below this range may also be suitable. LDPEs typically have a melt index $\leq$ about 1.5 g/10 min., preferably $\leq$ about 1.0 g/10 min., more preferably $\leq$ about 0.5 g/10 min., as determined according to ASTM D-1238 at 190°C/2.16 kg and when present comprise at least about 10.0 wt.%, preferably 10.0 wt.% to 30 wt.%, more preferably 15.0 wt.% to 25.0 wt.%, of the core layer, based on the total weight of the core layer.

Some linear low density polyethylenes (LLDPEs) suitable for use in the core layer may have a density overlapping the range of plastomers and LDPE, i.e., 0.890 g/cm$^3$ to 0.930 g/cm$^3$, typically from 0.915 g/cm$^3$ to 0.930 g/cm$^3$. LLDPEs useful herein include copolymers of ethylene and at least one $\alpha$-olefin having from 3 to about 20 carbon atoms and have a composition distribution breadth index (CDBI) of at least 70%, a melt index (MI), measured at 190°C and 2.16 kg, of from about 0.1 g/10 min. to about 15 g/10 min., a density of from about 0.910 g/cm$^3$ to about 0.945 g/cm$^3$, and a molecular

weight distribution (MWD) of from about 2.5 to about 5.5.

LLDPEs suitable for use in embodiments of the invention also include ethylene copolymers comprising at least 50.0 wt.% ethylene, and have up to 50.0 wt.%, preferably 1.0 wt.% to 35.0 wt.%, even more preferably 1.0 wt.% to 6.0 wt.% of a $C_3$ to $C_{20}$ comonomer (preferably hexene or octene), based upon the weight of the copolymer. The polyethylene copolymers preferably have a composition distribution breadth index (CDBI) of 60% or more, preferably 60% to 80%, preferably 65% to 80%. In another preferred embodiment, the ethylene copolymers have a density of 0.910 g/cm$^3$ to 0.950 g/cm$^3$ (preferably 0.915 g/cm$^3$ to 0.940 g/cm$^3$, preferably 0.918 g/cm$^3$ to 0.925 g/cm$^3$) and a CDBI of 60% to 80%, preferably between 65% and 80%. Preferably, these polymers are metallocene polyethylenes (mPEs). Some such LLDPE's are available from ExxonMobil Chemical Company under the trade name EXCEED™ mPE resins. Particularly preferred LLDPEs of this type are ethylene/octene copolymer having a melt index of from about 0.5 g/10 min. to about 10.0 g/10 min., particularly from about 0.5 g/10 min. to 2.0 g/10 min., as determined according to ASTM D-1238 at 190°C/2.16 kg. When present such LLDPEs comprise at least about 50.0 wt.% to 100.0 wt.%, preferably 60.0 wt.% to 95 wt.%, more preferably 70.0 wt.% to 90.0 wt.%, of the core layer, based on the total weight of the core layer. LLDPEs of this type are referred to hereinafter as LLDPE-1.

Still other suitable LLDPEs include ethylene copolymers comprising mPEs described in U.S. Patent App. Pub. 2007/0260016 and U.S. Patent No. 6,476,171, e.g., copolymers of an ethylene and at least one alpha olefin having at least 5 carbon atoms obtainable by a continuous gas phase polymerization using supported catalyst of an activated molecularly discrete catalyst in the substantial absence of an aluminum alkyl based scavenger (e.g., triethylaluminum, trimethylaluminum, tri-isobutyl aluminum, tri-n-hexylaluminum, and the like), which polymer has a Melt Index of from 0.1 to 15 (ASTM D-1238, condition E); a CDBI of at least 70%, a density of from 0.910 g/cc to 0.930 g/cc; a Haze (ASTM D-1003) value of less than 20; a Melt Index ratio (121/12, ASTM D-1238) of from 35 to 80; an averaged Modulus (M) ("averaged Modulus" being the sum of the 1% secant Modulus determined according to ASTM D/882-91 in the machine direction and in the transverse direction divided by two as is defined in U.S. Patent No. 6,255,426) of from 20,000 psi to 60,000 psi (13790 N/cm$^2$ to 41369 N/cm$^2$) and a relation between M and the Dart Impact Strength (26 inch, ASTM D-1709) in g/mil (g/25.4 $\mu$m) (DIS) complying with the formula:

$$\mathrm{DIS} \geq 0.8 \text{ x } [100 + e^{(11.71 - 0.000268 \text{x} M + 2.183 \text{x} 10^{-9} \text{x} M^2)}],$$

where "e" represents 2.7183, the base Napierian logarithm, M is the averaged Modulus in psi and DIS is the 26 inch (66cm) dart impact strength. Some such LLDPEs are available from ExxonMobil Chemical Company under the trade name ENABLE™ mPE resins. Particularly, preferred core layers including such an LLDPE include an ethylene/hexene copolymer having a melt index of from ≤ 1.5 g/10 min., particularly from about 0.1 g/10 min. to 1.0 g/10 min., as determined according to ASTM D-1238 at 190°C/2.16 kg and have a density of from 0.910 g/cm$^3$ to 0.940 g/cm$^3$, preferably 0.915g/cm$^3$ to 0.930 g/cm$^3$, more preferably 0.920 g/cm$^3$ to 0.930 g/cm$^3$. When present LLDPEs of this type comprise 5.0 wt.% to < 50.0 wt.%, preferably 10.0 wt.% to 40 wt.%, more preferably 15.0 wt.% to 30.0 wt.%, of the core layer, based on the total weight of the core layer. LLDPEs of this type are referred to hereinafter as LLDPE-2.

In an embodiment of the invention, the core layer comprises preferably at least about 10.0 wt.% of LLDPE-1 or LLDPE-2 having a melt index ratio (MIR $I_{21.6}/I_{2.16}$ @ 190°C) ≥ about 35 as determined according to ASTM D-1238. In an embodiment of the invention, the core layer comprises at least about 10.0 wt.% of a heterogeneously branched LDPE with a melt index ≤ about 1.5 g/10 min. as determined according to ASTM D-1238 at 190°C/2.16 kg.

Suitable films may comprise a core layer which displays the HTC effect. HTC indicates High Throughput High Clarity films, as disclosed in U.S. Patent No. 6,368,545. Accordingly, in an embodiment of the invention, the core layer has a haze < about 10% as determined according to ASTM D-1003, and demonstrates an improvement in optical properties (e.g., a reduction in haze according to ASTM D-1003) when produced under a deformation rate ≥ about 0.6 s$^{-1}$, as compared to an identical film produced at lower deformation rate.

Particular core layers include 50.0 wt.% to 100.0 wt.%, preferably 60.0 wt.% to 95 wt.%, more preferably 70.0 wt.% to 90.0 wt.% of LLDPE-1 in combination with at least 5.0 wt.%, 10.0 wt.%, or at least 20 wt.%, particularly 5.0 wt.% to < 50.0 wt.%, preferably 10.0 wt.% to 40 wt.%, more preferably 15.0 wt.% to 30.0 wt.% of LLDPE-2, based on the total weight of the core layer. Some other preferred core layers include 50.0 wt.% to 100.0 wt.%, preferably 60.0 wt.% to 95 wt.%, more preferably 70.0 wt.% to 90.0 wt.% of LLDPE-1 in combination with at least 10.0 wt.%, preferably 10.0 wt.% to 30.0 wt.%, more preferably 15.0 wt.% to 25.0 wt.% of a low density polyethylene, based on the total weight of the core layer.

In some embodiments of the invention, the core layer of the oriented multilayer film comprises one or more tie layers. When present, tie layers are placed at the exterior portion of the core layer to act as interface for contacting the first and/or second skin layer. For example, in one embodiment, the tie layers form the outer portions of the core layer such that the tie layers are from the region between an interior portion of the core layer and the first and/or second skin layers. The tie layers can comprise any polymer which holds together the two layers to be joined. While the tie layers are described as a portion of the core layer, one skilled in the art will appreciate that this description is a formality and tie layers may also be described as separate layers, formed by coextrusion, and may be the same or different composition as the interior portion of the core.

**Outer layer B**

Optional outer layer B is in surface contact with a second side of the core layer opposite the side in contact with outer layer A. Preferably, optional outer layer B comprises a linear low density polyethylene such as LLDPE-1. Alternatively, optional outer layer B may be a Ziegler Natta ethylene-copolymer LLDPE. Examples include the ethylene-butylene Ziegler Natta copolymer available from ExxonMobil Chemical Company under the trade name ExxonMobil LLDPE, particularly, LL1001XV™. Preferably, optional outer layer B includes 50.0 wt.% to 100.0 wt.%, preferably 80.0 wt.% to 100.0 wt.%, more preferably 90.0 wt.% to 100.0 wt.% of LLDPE-1, Ziegler Natta ethylene-copolymer LLDPE, or blends thereof, based on the total weight of optional outer layer B. In an embodiment of the invention, the outer layer B consists essentially of a LLDPE-1. In an embodiment of the invention, the outer layer B comprises no more than 0.2 wt.%, preferably < 0.1 wt.%, more preferably < 0.05 wt.% of a solid particulate antiblock, based on the weight of layer B. A solid particulate antiblock may also be absent from layer B.

**Blown Films**

It has been discovered that a blown film comprising an outer layer A, a core layer, and an outer layer B as described herein exhibits a reduced noise when being unwrapped from a roll or spool consistent with use in a wrapping machine. Accordingly, films disclosed herein according to an embodiment demonstrate a reduction in the noise associated with wrapping an article comprising attaching an end of a stretch wrap film from a roll to the article and unwinding the film from the roll and wrapping the article with the film, wherein the film is unwound at a rate from at least about 1, preferably at least 5, preferably at least about 10 m/min. to 120 m/min.

In an embodiment of the invention, the multilayer blown film may also have a peel cling force from 80.0 cN to about 150.0 cN, when determined according to ASTM D-5458. In an embodiment of the invention, the peel cling force is determined following a post-blowing thermal history consisting only of temperatures below 50°C. Accordingly, the films disclosed in an embodiment herein do not require thermal tempering, as is common in the art, wherein the films are held for a period of time at an elevated temperature to allow various components of the film to rise to the surface of the film. For example, it is common in the art to maintain films comprising a $C_4$-$C_{10}$-based polymer having an Mw < about $5.00 \times 10^4$ g/mol. at an elevated temperature for 24 hours or more to allow the tackifier to migrate to the surface of the film such that an acceptable amount of tack is present for end use. In contrast, the presently claimed invention does not require this thermal history to perform in an acceptable way.

In an embodiment of the invention, the multilayer blown film has a natural draw ratio $\geq$ about $1.50 \times 10^2$%, preferably greater than or equal to about $2.00 \times 10^2$%, when determined from a stress-elongation measurement according to ASTM D-882, as described herein.

As discussed above, the addition of propylene-based elastomer to the outer layer A enhances the peel cling force of the film. Accordingly, a method of controlling the peel cling force of a multilayer blown film comprises selecting a core layer composition comprising polyethylene; selecting an outer layer A composition comprising a plastomer and an amount of a polypropylene-based elastomer from about 0.1 wt.% to about 45 wt.%, based on the total weight of the outer layer A composition, extruding the core layer composition and the outer layer A composition from a die to produce a multilayer blown film comprising an outer layer A composition in surface contact with a core layer comprising the core layer composition, wherein the amount of the propylene-based elastomer in the outer layer A composition is selected to control the peel cling force of the multilayer blown film.

In an embodiment of the invention, a method to produce a multilayer blown film comprises selecting a first polyethylene layer comprising a low density polyethylene; selecting a core layer polyethylene comprising at least about 10.0 wt.% of a linear low density polyethylene (LLDPE) having a melt index ratio (MIR $I_{21.6}/I_{2.16}$ @ 190°C) $\geq$ about 35, as determined according to ASTM D-1238 at 190°C, or at least about 10.0 wt.% of a heterogeneously branched LDPE with a melt index $\leq$ about 1.5 g/10 min., as determined according to ASTM D-1238 at 190°C/2.16 kg; and selecting a plastomer; followed by extruding the first polyethylene, the core layer polyethylene and the plastomer from a die to produce a multilayer blown film comprising the core polyethylene layer disposed between the first polyethylene layer and the plastomer layer at a strain rate $\geq$ about 0.6 s$^{-1}$, wherein the plastomer layer comprises less than about 0.1 wt.% of a $C_4$-$C_{10}$-based polymer having an Mw < about $5.00 \times 10^4$ g/mol.

## Stretch-Wrap Films

In an embodiment of the invention, a roll of stretch wrap film comprises a multilayer blown film unwindably wrapped around a center axis, the film comprising a core layer as described above disposed between an outer layer B and an outer layer A each as described above, particularly where the core layer comprises at least about 10.0 wt.% of LLDPE-1 or LLDPE-2 having a melt index ratio (MIR $I_{21.6}/I_{2.16}$ @ 190°C) ≥ about 35 as determined according to ASTM D-1238 or at least about 10.0 wt.% of a heterogeneously branched LDPE with a melt index ≤ about 1.5 g/10 min. as determined according to ASTM D-1238 at 190°C/2.16 kg.; and wherein the stretch wrap film produces noise less than 80 dB when unwound from the roll, preferably as part of a machine wrapping process.

In an embodiment of the invention, a stretch wrap film comprises a multilayer blown film comprising a core layer as described herein disposed between an outer layer B and an outer layer A each as described above, particularly where the core layer comprises at least about 10.0 wt.% of LLDPE-1 or LLDPE-2 having a melt index ratio (MIR $I_{21.6}/I_{2.16}$ @ 190°C) ≥ about 35 as determined according to ASTM D-1238 or at least about 10.0 wt.% of a heterogeneously branched LDPE with a melt index ≤ about 1.5 g/10 min. as determined according to ASTM D-1238 at 190°C/2.16 kg.; wherein the stretch wrap film has a peel cling force ≥ about 80 cN and less than or equal to about 150 cN, when determined according to ASTM D-5458, and wherein the stretch wrap film has a natural draw ratio ≥ about 250%, when determined from stress-elongation measurements according to ASTM D-882.

## Surface Protection Films

In an embodiment of the invention, a film for surface protection that can be removably attached to a substrate comprises a core layer as described herein and an outer layer A each as described above, particularly where the core layer comprises at least about 10.0 wt.% of LLDPE-1 or LLDPE-2 having a melt index ratio (MIR $I_{21.6}/I_{2.16}$ @ 190°C) ≥ about 35 as determined according to ASTM D-1238 or at least about 10.0 wt.% of a heterogeneously branched LDPE with a melt index ≤ about 1.5 g/10 min. as determined according to ASTM D-1238 at 190°C/2.16 kg. In surface protection films including optional outer layer B, outer layer B may include a heterogeneously branched LDPE as described for use in the core layer. The films may also be used in surface protection applications with or without stretching. The films are effective, especially in the temporary protection of surfaces during manufacturing, transportation, and the like.

The adhesive characteristics of the films described herein may depend on the extrusion conditions and other factors such as the type of comonomer incorporated, the thickness of the film, and the extractables content of the copolymer and resulting film. The films preferably have a thickness of from 10 microns to 50 microns. The outer layer A and the outer layer B of the films may have a thickness of from 1 micron to 20 microns, preferably from 1.5 microns to 10 microns. The films preferably have at least three layers formed by coextrusion, with an adhesion imparting surface layer constituting from 10% to 60% of the overall thickness.

In an embodiment of the invention, the layer distribution, as expressed as A/C/B, wherein A represents the outer layer A, C represents the core layer, and B represents the outer layer B may include a relative thickness of B = 1 to 50, C = 10 to 98, and A = 1 to 50, wherein A+B+C = 100, wherein the total thickness of the film is from 10 microns to about 50 microns, preferably from about 15 microns to 30 microns. In an embodiment of the invention, the layer distribution may be from about 5/90/5 to about 10/80/10, up to about 1/2/1 to about 1/1/1.

Films may further include various conventional additives known in the art, so long as they do not detract from the inventive properties of the films. Examples of conventional additives include fillers; antioxidants (e.g., hindered phenolics; phosphites); anti-cling additives; tackifiers, such as polybutenes, terpene resins, aliphatic and aromatic hydrocarbon resins, alkali metal and glycerol stearates and hydrogenated resins; UV stabilizers; heat stabilizers; antiblocking agents; release agents; anti-static agents; pigments; colorants; dyes; waxes; silica; fillers; talc; and the like.

Exemplary anti-oxidants include alkylated phenols, hindered phenols, and phenol derivatives. Examples of hindered phenolic antioxidants are commercially available under the IRGANOX™ series of trade designations including IRGANOX™ 565, IRGANOX™ 1010, IRGANOX™ 3052, and IRGANOX™ 1076 from BASF Chemicals (Basel, Switzerland). In one embodiment, the adhesive composition comprises from 0.01 wt.% to 3 wt.% of total antioxidant on an active or neat basis (excluding inerts in as-received commercially available antioxidant packages, and including any antioxidant in the blend components), preferably from 0.05 wt.% to 2 wt.%.

There are many potential other applications of films produced from the present copolymers. These films can be made into other forms, such as tape, by any one of a number of well-known cutting, slitting, and/or rewinding techniques. The surfaces of the film of this invention can be modified by such known and conventional post-forming techniques such as flame treatment, corona discharge, chemical treatment, and the like.

In an embodiment of the invention, a method of wrapping an article comprises attaching or contacting an end of a stretch wrap film from a roll to the article; unwinding the film from the roll and wrapping the article with the film, wherein the film is unwound at a rate from 10 to 120 m/min., wherein the total noise associated with unwinding the film is less than 90 dB, wherein the film comprises a core layer as described herein disposed between an outer layer B and an outer layer A, particularly where the core layer comprises at least about 10.0 wt.% of LLDPE-1 or LLDPE-2 having a melt index ratio (MIR $I_{21.6}/I_{2.16}$ @ 190°C) > about 35 5 as determined according to ASTM D-1238 or at least about 10.0 wt.% of a heterogeneously branched LDPE with a melt index ≤ about 1.5 g/10 min. as determined according to ASTM D-1238 at 190°C/2.16 kg.

In an embodiment of the invention, a method of wrapping an article comprises attaching or contacting an end of a stretch wrap film as described herein from a roll to the article; unwinding the film from the roll and wrapping the article with the film, wherein the film is unwound at a rate from 10 to 120 m/min., wherein the total noise associated with unwinding the film is less than 85 dB, preferably less than 80 dB, preferably less than 75 dB, with less than 70 dB being still more preferred. In an embodiment of the invention, the noise associated with unwinding the film is less than 20 dB over ambient noise, preferably less than 15 dB over ambient noise, preferably less than 10 dB over ambient noise, with less than 5 dB over ambient noise being more preferred. Noise may be measured according to ASTM E2202 - 02(2009).

In an embodiment of the invention, a method of reducing the noise associated with wrapping an article comprising attaching or contacting an end of a stretch wrap film from a roll to the article and unwinding the film from the roll and wrapping the article with the film, wherein the film is unwound at a rate from 10 to 120 m/min., comprising providing the roll of stretch wrap film in the attaching, unwinding and wrapping, wherein the stretch wrap film comprises a core layer as described herein disposed between an outer layer B and an outer layer A, particularly where the core layer comprises at least about 10.0 wt.% of LLDPE-1 or LLDPE-2 having a melt index ratio (MIR $I_{21.6}/I_{2.16}$ @ 190°C) ≥ about 35 as determined according to ASTM D-1238 or at least about 10.0 wt.% of a heterogeneously branched LDPE with a melt index ≤ about min. as determined according to ASTM D-1238 at 190°C/2.16 kg.

## Embodiments

Accordingly, the present invention provides the following embodiments of the invention.

A. Embodiments of the invention include a film for uses as a stretch wrap film, cling film or surface protective film, comprising an outer layer A in surface contact with a core layer, wherein the outer layer A comprises a plastomer and from 1.0 to 25.0 wt% of a propylene-based elastomer, wherein the outer layer A contains no more than 0.1 wt.% of a $C_4$-$C_{10}$-based polymer having an Mw < about $5.00 \times 10^4$ g/mol, and wherein the core layer comprises at least 50 wt% of a polyethylene.

B. Embodiments of the invention include films of Embodiment A, wherein the outer layer A comprises from 2.0 to 20.0 wt.% of a propylene-based elastomer.

C. Embodiments of the invention include films of Embodiments A and B, wherein the plastomer comprises an ethylene-based plastomer comprising about 87 mol.% to about 97.5 mol.% of polymer units derived from ethylene and about 13 mol.% to about 2.5 mol.% of polymer units derived from an alpha-olefin, said plastomer having a density of from 0.86 g/cm$^3$ to 0.910 g/cm$^3$, an Mw ≥ 70,000 to < 130,000, and a heat of fusion of greater than 75 J/g, preferably less than 130.0 J/g, 125.0 J/g, 120.0 J/g, 110.0 J/g, or 100.0 J/g, as determined by differential scanning calorimetry; preferably also having a CDBI > 60, preferably > 80, and more preferably > 90, and characterized by a DSC melting point curve that exhibits the occurrence of a single melting point peak occurring in the region of 50°C to 110°C.

D. Embodiments of the invention include films of any of Embodiments A-C, wherein the core layer comprises at least about 50.0 wt.% to 100.0 wt.%, preferably 60.0 wt.% to 95 wt.%, more preferably 70.0 wt.% to 90.0 wt.% (based on the total weight of the core layer) of a first polyethylene that is preferably a linear low density polyethylene.

E. Embodiments of the invention include films of Embodiment D, wherein the first polyethylene comprises at least 50.0 wt.% ethylene and up to 50.0 wt.%, preferably 1.0 wt.% to 35.0 wt.%, even more preferably 1.0 wt.% to 6.0 wt.% of a $C_3$ to $C_{20}$ comonomer (based upon the weight of the copolymer), the first polyethylene having a composition distribution breadth index (CDBI) ≥ 60% preferably 60% to 80%, preferably 65% to 80%, and a density of 0.910 g/cm$^3$ to 0.950 g/cm$^3$; preferably 0.915 g/cm$^3$ to 0.940 g/cm$^3$, preferably 0.918 g/cm$^3$ to 0.925 g/cm$^3$.

F. Embodiments of the invention include films of Embodiment E, the first polyethylene comprises an ethylene/octene copolymer having a melt index of from about 0.5 g/10 min. to about 10.0 g/10 min., particularly from about 0.5 g/10 min. to 2.0 g/10 min., as determined according to ASTM D-1238 at 190°C/2.16 kg.

G. Embodiments of the invention include films of any of Embodiment D-F, wherein the core layer further comprises at least about 10.0 wt.%, preferably < 50.0 wt.%, preferably 10.0 wt.% to 40.0 wt.%, more preferably 15.0 wt.% to 30.0 wt.% or 10.0 wt.% to 30.0 wt.% of a second polyethylene (based on the total weight of the core layer). Preferred polyethylenes include linear low density polyethylenes and low density polyethylenes.

H. Embodiments of the invention include films of Embodiment G, wherein the second polyethylene comprises a polyethylene having a melt index of from 0.1 to 15, a compositional distribution breadth index of at least 70%, a density of from 0.910 to 0.930 g/ml, a haze value of less than 20%, a melt index ratio of from 35 to 80, an averaged Modulus (M) of from 20,000 to 60,000 psi, and a relation between M and the dart impact strength in g/mil (DIS) complying with the formula:

$$DIS \geq 0.8 \times [100 + e^{(11.71 - 0.000268 \times M + 2.183 \times 10-9 \times M2})],$$

where "e" represents 2.7183, the base Napierian logarithm, M is the averaged Modulus in psi and DIS is the 66cm dart impact strength. Preferred such second polyethylenes comprise an ethylene/hexene copolymer having a melt index of from $\leq$ 1.5 g/10 min., particularly from about 0.1 g/10 min. to 1.0 g/10 min., as determined according to ASTM D-1238 at 190°C/2.16 kg and have a density of from 0.915g/cm$^3$ to 0.930 g/cm$^3$, more preferably 0.920 g/cm$^3$ to 0.930 g/cm$^3$.

I. Embodiments of the invention include films of Embodiment G, wherein the second polyethylene comprises a heterogeneously branched polyethylene comprising at least 85 mol.% of units derived from ethylene and having a density of from 0.910 g/cm$^3$ to 0.940 g/cm$^3$ and a melt index $\leq$ about 1.5 g/10 min., as determined according to ASTM D-1238 at 190°C/2.16 kg.

J. Embodiments of the invention include films of any of Embodiments A-I, wherein the plastomer has a density of > 0.86 g/cm$^3$ to < 0.910 g/cm$^3$, preferably from 0.88 g/cm$^3$ to 0.905 g/cm$^3$, more preferably from 0.870 g/cm$^3$ to 0.890 g/cm$^3$.

K. Embodiments of the invention include films of any of Embodiments A-J, wherein the film is a multilayer blown film further comprising an outer layer B comprising polyethylene, wherein the outer layer B is in surface contact with a surface of the core layer opposite the outer layer A.

L. Embodiments of the invention include films of Embodiment K, wherein the outer layer B comprises 50.0 wt.% to 100.0 wt.% of a polyethylene comprising at least 50.0 wt.% ethylene and 1.0 wt.% to 35.0 wt.% of a C$_3$ to C$_{20}$ alpha-olefin comonomer (based upon the weight of the copolymer), and having a composition distribution breadth index (CDBI) $\geq$ 60% and a density of 0.910 g/cm$^3$ to 0.950 g/cm$^3$.

M. Embodiments of the invention include films of Embodiment L, wherein the core layer comprises:

about 70 wt.% to 90 wt.% of a first polyethylene having at least 50.0 wt.% ethylene and 1.0 wt.% to 35.0 wt.% of a C$_3$ to C$_{20}$ alpha-olefin comonomer (based upon the weight of the copolymer), a composition distribution breadth index (CDBI) $\geq$ 60%, a density of 0.910 g/cm$^3$ to 0.950 g/cm$^3$; and
about 10.0 wt.% to about 30.0 wt.% of a second polyethylene comprising:

i) a polyethylene having a melt index of from 0.1 to 15, a compositional distribution breadth index of at least 70%, a density of from 0.910 to 0.930 g/ml, a haze value of less than 20%, a melt index ratio of from 35 to 80, an averaged Modulus (M) of from 20,000 to 60,000 psi, and a relation between M and the dart impact strength in g/mil (DIS) complying with the formula:

$$DIS \geq 0.8 \times [100 + e^{(11.71 - 0.000268 \times M + 2.183 \times 10-9 \times M2})],$$

where "e" represents 2.7183, the base Napierian logarithm, M is the averaged Modulus in psi and DIS is the 66cm dart impact strength; or
ii) a heterogeneously branched polyethylene comprising at least 85 mol.% of units derived from ethylene and having a density of from 0.910 g/cm$^3$ to 0.940 g/cm$^3$ and a melt index $\leq$ about 1.5 g/10 min., as determined according to ASTM D-1238 at 190°C/2.16 kg.

N. Embodiments of the invention include films of any of Embodiments L-M, wherein the outer layer B comprises $\leq$ 0.2 wt.%, preferably < 0.1 wt.%, more preferably < 0.05 wt.% of a particulate antiblock, based on the weight of layer B. A solid particulate antiblock may also be absent from layer B.

O. Embodiments of the invention include films of any of Embodiments A-N wherein the film has a natural draw ratio $\geq$ about 2.50$\times$10$^2$%, when determined from stress-elongation measurements according to ASTM D-882.

P. Embodiments of the invention include films of any of Embodiments A-O wherein the film has a noise rating < 9.0$\times$10$^1$ dB.

Q. Embodiments of the invention include films of any of Embodiments A-P, wherein the C$_4$-C$_{10}$-based polymer comprises a polyisobutylene polymer or copolymer.

X. Any of the previous embodiments of the invention, wherein the outer layer A is a tack layer.

Y. Any of the previous embodiments of the invention, including an outer layer B wherein the outer layer B is an anti-cling layer.

Z. Embodiments of the invention include methods of wrapping an article with a film of any of the previous embodiments, wherein the method comprises:

attaching an end of the film from a film-roll to the article;
unwinding the film from the film-roll at a rate from 1 to 400 m/min; and
wrapping the article with the film, wherein the total noise associated with unwinding the film is less than $9.0 \times 10^1$ dB.

AA. Embodiments of the invention include methods of Embodiment Z wherein the outer layer B comprising a linear low density polyethylene and the core layer comprises:

a) about 70 wt.% to 90 wt.% of a first polyethylene comprising at least 50.0 wt.% ethylene and 1.0 wt.% to 35.0 wt.% of a $C_3$ to $C_{20}$ alpha-olefin comonomer (based upon the weight of the copolymer), and having a composition distribution breadth index (CDBI) $\geq$ 60%, and a density of 0.910 g/cm$^3$ to 0.950 g/cm$^3$; and
b) about 10.0 wt.% to about 30.0 wt.% of a second polyethylene comprising:

i) a polyethylene having a melt index of from 0.1 to 15, a compositional distribution breadth index of at least 70%, a density of from 0.910 to 0.930 g/ml, a haze value of less than 20%, a melt index ratio of from 35 to 80, an averaged Modulus (M) of from 20,000 to 60,000 psi, and a relation between M and the dart impact strength in g/mil (DIS) complying with the formula:

$$DIS \geq 0.8 \text{ x } [100 + e^{(11.71 - 0.000268 \text{x} M + 2.183 \text{x} 10 - 9 \text{x} M2)}],$$

where "e" represents 2.7183, the base Napierian logarithm, M is the averaged Modulus in psi and DIS is the 66cm dart impact strength; or
ii) a heterogeneously branched polyethylene comprising at least 85 mol.% of units derived from ethylene and having a density of from 0.910 g/cm$^3$ to 0.940 g/cm$^3$ and a melt index $\leq$ about 1.5 g/10 min., as determined according to ASTM D-1238 at 190°C/2.16 kg.

AB. Embodiments of the invention include methods of any of Embodiments Z-AA, wherein the method further includes a post-blowing thermal treatment wherein the temperature does not exceed 50°C.

## EXAMPLES

A number of Examples and Comparative Examples were produced to demonstrate embodiments of this disclosure. The test methods utilized herein are disclosed in Table 1.

| Table 1. Test methods | |
|---|---|
| Parameter | Test Method |
| Clarity | ASTM D-1746 |
| Density of Plastics by Gradient Technique | ASTM D-4703 / ASTM D-1505 / ISO 1183 |
| Elmendorf Tear Strength | ASTM D1922-06a |
| Gloss 45° | ASTM D-2457 |
| Gloss | ASTM D-2457 |
| Impact resistance by free-falling dart: method A and B | ASTM D-1709 |
| Peel cling of stretch wrap film | ASTM D-5458 |
| Tensile Properties on stretch film | ASTM D-882 |

The components utilized to produce the Examples are listed in Table 2.

| Table 2. Components Used | | |
|---|---|---|
| **Description** | **Trade Name** | **Supplier** |
| Metallocene ethylene-hexene copolymer | EXCEED™ 1018CA | ExxonMobil |
| Metallocene ethylene-hexene copolymer | ENABLE™ 20-05CH | ExxonMobil |
| Metallocene ethylene-hexene copolymer | ENABLE™ 27-03CH | ExxonMobil |
| Ziegler Natta ethylene-butylene copolymer | LL1001XV | ExxonMobil |
| Polyisobutylene tackifier | PW60 | Polytechs |
| Ethylene-octene plastomer | EXACT ™ 8201 | ExxonMobil |
| Ethylene-octene plastomer | EXACT ™ 0201 | ExxonMobil |
| Propylene-based elastomer | VISTAMAXX™ 6102FL | ExxonMobil |
| Propylene-based elastomer | VISTAMAXX™ 6202F | ExxonMobil |
| LDPE | LD165BW1 | ExxonMobil |
| LDPE | LD150BW | ExxonMobil |

**Coextrusion Processes**

The films are produced by blown film coextrusion where at least two molten polymer compositions are extruded and bonded together in a molten condition in a die exit. The films are formed, while cooling progressively, after stretching, orientation and crystallization until the film reaches a take up device (e.g., a pair of pinch rollers) enclosing the top of the bubble.

The blown film is pulled upwards after exiting from the die and is simultaneously inflated and stretched transversely sideways to an extent according to a standard blow up ratio such that the inflation provide the transverse direction (TD) stretch, while the upwards pull by the pinch rollers provide a machine direction (MD) stretch. As the polymer cools after exiting the die and inflation, it crystallizes at the frost line to prevent further MD or TD orientation, as is readily known in the art. All of the films exemplified herein are produced on a Windmoeller & Hoelscher 3-layer coextrusion blown film line with following features:

Extruder A (skin layer, outside of bubble): 60 mm diameter, smooth bore;
Extruder B (core layer): 90 mm diameter, grooved feed;
Extruder C (skin layer, inside of bubble): 60 mm diameter, grooved feed; 250 mm die diameter;
1.4 mm or HQ 1.25-2.25 mm die gap; and
IBC and Optifil P2K thickness profile control.

All films are processed under the same conditions with temperature settings ranging from approximately 190°C to 200°C on the die and extruder setpoint, with approximately 200 kg/hr output.

In the examples, Comparative Examples CE1, CE2, CE3, and CE5 are examples using polyisobutene (PIB) as a tackifier. Comparative Example CE4 is a non-PIB example showing the need for PIB as a tackifier in conventional films. Reference Examples E6, E7, E8, and E9 show an embodiment having a plastomer/HTC arrangement with a density of the plastomer of 0.882 g/cc. Reference Example E6bis shows a plastomer density of 0.902 g/cc. Reference Examples E6, E6bis, E7, and E8 utilize ENABLE™ 27-03 as the HTC inducing material; Reference Example E9 includes a low MI LDPE as the HTC inducing material. The data are presented in Table 3, wherein reference examples are labeled with the prefix "E" and comparative examples are labeled with the prefix "CE".

As the data shows, in addition to the improved cling force, some of the reference examples also provide beneficial effects on toughness (tensile at break), dart impact, Elmendorf tear in MD, and optical properties.

The cling force and noise associated with unwinding is determined on the comparative examples comprising the low molecular weight tackifier (PW60) after aging of the film for two weeks at 50°C to allow the polyisobutylene to migrate to the surface, which is the common practice in the art. However, the reference examples are measured without any thermal aging of the material.

Furthermore, unwinding of the exemplary films from a roll produces essentially no noise from the unwinding process in contrast to the comparative examples which included PIB, all of which produced considerable noise above ambient upon unwinding.

| Table 3. Coextruded Film - Low Noise | | | | | | | | | | |
|---|---|---|---|---|---|---|---|---|---|---|
| Example | CE1 | CE2 | CE3 | CE4 | CE5 | E6 | E6bis | E7 | E8 | E9 |
| OUTER LAYER B | | | | | | | | | | |
| EXCEED™ 1018CA, wt.% | 90 | 90 | 100 | 100 | 100 | 100 | 100 | 100 | 100 | 100 |
| LD150BW, wt.% | 10 | 10 | | | | | | | | |
| CORE LAYER | | | | | | | | | | |
| EXCEED™ 1018CA, wt.% | 94 | 94 | | | 74 | 80 | 80 | 80 | 80 | 80 |
| PW60, wt.% | 6 | 6 | 6 | | 6 | | | | | |
| ENABLE™ 20-05, wt.% | | | 74 | 80 | | | | | | |
| ENABLE™ 27-03, wt.% | | | 20 | 20 | 20 | 20 | 20 | 20 | 20 | |
| LD165BW1 | | | | | | | | | | 20 |
| OUTER LAYER A | | | | | | | | | | |
| EXCEED™ 1018CA, wt.% | 94 | | | | 94 | | | | | |
| PW60, wt.% | 6 | 6 | 6 | | 6 | | | | | |
| LL1001XV, wt.% | | 94 | 94 | 100 | | | | | | |
| EXACT ™ 8201, wt.% | | | | | | 100 | | 100 | 100 | 100 |
| EXACT ™ 0201, wt.% | | | | | | | 100 | | | |
| Layer Distribution | | | | | | | | | | |
| Anti-cling/Core/Tack | 1/2/1 | 1/2/1 | 1/2/1 | 1/2/1 | 1/2/1 | 1/2/1 | 1/2/1 | 1/2/1 | 1/4/3 | 1/4/3 |
| Film Properties | | | | | | | | | | |
| Thickness, μm | 20 | 20 | 19 | 19 | 21 | 20 | 18 | 20 | 21 | 21 |
| Haze, % | 1.5 | 1.8 | 2.0 | 4.5 | 1.9 | 1.4 | 2.1 | 1.5 | 1.5 | 1.3 |
| Gloss 45° | 89.8 | 90.4 | 91.8 | 80.1 | 91.4 | 90.4 | 85.2 | 88.9 | 89.4 | 89.8 |
| Clarity, % | 85.5 | 87.8 | 84.0 | 80.5 | 89.3 | 89.3 | 88.0 | 87.2 | 86.0 | 87.0 |
| Elmendorf Tear MD, g/μm | 6.1 | 5.9 | 5.3 | 4.9 | 8.7 | 6.4 | 7.3 | 6.5 | 7.6 | 4.4 |
| Elmendorf Tear TD, g/μm | 19.7 | 19.1 | 19.9 | 17.6 | 19.1 | 14.0 | 15.6 | 15.8 | 16.4 | 25.8 |
| Dart impact, g/μm | 45 | 30 | 21 | 15 | 43 | >68 | >68 | >68 | >68 | >68 |

EP 2 785 526 B1

(continued)

| Tensile Properties on stretch film MD | | | | | | | | | | |
|---|---|---|---|---|---|---|---|---|---|---|
| 10% Offset yield stress, MPa | 10 | 10.2 | 10.9 | 11.3 | 9.8 | 8.7 | 9.9 | 8.6 | 9.3 | 11.5 |
| 2"d yield stress, MPa | 13.8 | 14.2 | 16.6 | 18.0 | 13.2 | 12.0 | 14.0 | 12.3 | 12.7 | 18.6 |
| Delta 1st and 2nd yield, MPa | 3.8 | 4.0 | 5.7 | 6.7 | 3.4 | 3.3 | 4.1 | 3.7 | 3.4 | 7.1 |
| Tensile strength at break, MPa | 74.2 | 66.5 | 70.2 | 68.8 | 78.7 | 74.2 | 87.9 | 77.9 | 75.7 | 60.1 |
| Tensile elongation at break, % | 554 | 550 | 496 | 458 | 519 | 498 | 499 | 512 | 513 | 500 |
| Energy, mJ/mm$^3$ | 147 | 141 | 146 | 137 | 143 | 128 | 155 | 139 | 134 | 135 |
| 1% modulus, MPa | 152 | 171 | 194 | 220 | 165 | 148 | 168 | 144 | 159 | 194 |
| Natural draw ratio (NDR), % | 349 | 337 | 280 | 268 | 317 | 310 | 301 | 314 | 323 | 329 |
| Force at NDR, MPa | 23.8 | 22.4 | 24.3 | 26.3 | 23.0 | 22.6 | 25.4 | 23.2 | 23.0 | 27.4 |
| Delta 2nd yield and force at NDR, MPa | 10 | 8.2 | 7.7 | 8.3 | 9.8 | 10.6 | 11.4 | 10.9 | 10.3 | 8.8 |
| Tensile Properties on stretch film TD | | | | | | | | | | |
| 10% Offset yield stress, MPa | 9.3 | 9.5 | 10.7 | 10.7 | 9.7 | 8.6 | 9.7 | 8.1 | 9.1 | 9.4 |
| Tensile strength at break, MPa | 62.7 | 56.5 | 52.3 | 51.1 | 65 | 69.5 | 72.5 | 65.8 | 68.8 | 65.4 |
| Tensile elongation at break, % | 689 | 696 | 680 | 668 | 696 | 676 | 682 | 668 | 668 | 666 |
| Energy, mJ/mm$^3$ | 148 | 140 | 135 | 130 | 154 | 144 | 162 | 135 | 146 | 141 |
| 1% modulus, MPa | 174 | 189 | 216 | 241 | 166 | 155 | 191 | 141 | 171 | 237 |
| Orientation Factor TD-MD-Modulus, MPa | 22 | 18 | 22 | 21 | 1 | 7 | 23 | -3 | 12 | 43 |
| Cling Properties | | | | | | | | | | |
| Cling force inside/outside, cN | 103 | 112 | 119 | 20 | 123 | 102 | 53 | 98 | 109 | 100 |
| *Noise unwinding, dB | 85.3 | -- | -- | -- | 86.6 | 71.6 | | | | 76.2 |
| * Noise determination represents the noise measured at a distance of 1 meter from the roll and is an average over 1 min. using a Solci-2 station winder at 40 m/min. with ambient noise between 68-72 dB. | | | | | | | | | | |

The noise during unwinding is determined using a Quest Technologies Sound Level Meter 2200. The measurements are acquired in a production environment having an ambient noise between 68 and 72 dB. The measurements are obtained using a range of 50 - 120 dB, weighting factor A and response factor F. Measurements are made after reset in run mode giving average noise level (setting LEQ) and represent the average during approximately 1 minute of unwinding on a Dolci 2 station winder at approximately 40 m/min. at a distance of 1 meter from the winding machine. Ambient noise is not subtracted from the noise of the unwinding. As such, the reported noise level includes the ambient noise. As the data show, the noise of the exemplary films is essentially identical to the ambient noise and thus, the unwinding of the exemplary films does not produce noise.

In a set of examples of the invention, the propylene-based elastomer is included. As the data shows, the cling can be tailored according to the required cling level through use of either a lower density plastomer and/or by selecting the blend ratio of the plastomer to the propylene-based elastomer. The blend of the plastomer and the propylene-based elastomer results in a level of tackiness which is higher than would be obtainable with either material alone. The use of an increased amount of propylene-based elastomer may induce cling forces which are so high, typically greater than 150 cN, that the film would not be as useful as a stretch film due to the possible inability to remove the film from the roll, but which may be suitable for a number of other uses which require cling forces higher than 150 cN. The data is shown in Table 4, wherein Reference Examples E6, E7, E8, and E9 from Table 3 are included to show the improvement obtained upon selection of the propylene-based elastomer.

In Reference Examples E6, E7, E8, and E9 EXACT ™ 8201 forms a tacky layer. Examples E10 and E11 each have 2.5% VISTAMAXX™ 6201 in EXACT ™ 8201 as the tacky layer, with different layer distribution, wherein the tacky layer is the thinnest layer. Example E12 has 5% VISTAMAXX™ 6102 and Example E13 has 20% VISTAMAXX™ 6102 in the tacky layer.

| Table 4. Coextruded Film - Controlled Tack | | | | | | | | |
|---|---|---|---|---|---|---|---|---|
| **EXAMPLE** | **E6** | **E8** | **E9** | **E7** | **E10** | **E11** | **E12** | **E13** |
| OUTER LAYER B | | | | | | | | |
| EXCEED™ 1018CA, wt.% | 100 | 100 | 100 | 100 | 100 | 100 | 100 | 100 |
| CORE LAYER | | | | | | | | |
| EXCEED™ 1018CA, wt.% | 80 | 80 | 80 | 80 | 80 | 80 | 80 | 80 |
| ENABLE™ 27-03, wt.% | 20 | 20 | | 20 | 20 | 20 | 20 | 20 |
| LD165BW1, wt.% | | | 20 | | | | | |
| OUTER LAYER A | | | | | | | | |
| EXACT ™ 8201, wt.% | 100 | 100 | 100 | 100 | 97.5 | 97.5 | 95 | 80 |
| VISTAMAXX™ 6102FL | | | | | 2.5 | 2.5 | 5 | 20 |
| **Layer Distribution** | | | | | | | | |
| Outer Layer B (Anti-cling)/Core/Outer Lay A (tack) | 1/2/1 | 1/4/3 | 1/4/3 | 1/2/1 | 1/2/1 | 1/4/3 | 1/2/1 | 1/2/1 |
| **Film Properties** | | | | | | | | |
| Haze, % | 1.4 | 1.5 | 1.3 | 1.5 | 2.3 | 3.7 | 2.2 | 2.7 |
| Gloss 45° | 90.4 | 89.4 | 89.8 | 88.9 | 81.9 | 76.3 | 90.5 | 87.9 |
| **Cling Properties** | | | | | | | | |
| Cling force inside/outside, cN | 102 | 109 | 100 | 98 | 211 | 258 | 252 | 269 |

Table 5 below shows film examples having an amount of propylene-based elastomer selected to target a cling force suitable for use as a stretch wrap film. Reference Example E6bis from Table 3, shows EXACT ™ 0201 as the tacky layer. Examples E14 and E14bis each have 2.5% VISTAMAXX™ 6201 in EXACT ™ 0201 as the tacky layer with a different layer distribution, wherein the tacky layer is the thinnest layer. Example E15 has 5% VISTAMAXX™ 6102, Example E16 has 10% VISTAMAXX™ 6102, and Example E18 has 20% VISTAMAXX™ 6102. Example E17 uses VISTAMAXX™ 6202F at 10% in EXACT ™ 0201.

| Table 5. Stretch Wrap Film - Controllable Tack | | | | | | | |
|---|---|---|---|---|---|---|---|
| **EXAMPLE** | **E6bis** | **E14** | **E14bis** | **E15** | **E16** | **E17** | **E18** |
| OUTER LAYER B | | | | | | | |
| EXCEED™ 1018CA, wt.% | 100 | 100 | 100 | 100 | 100 | 100 | 100 |
| CORE LAYER | | | | | | | |
| EXCEED™ 1018CA, wt.% | 80 | 80 | 80 | 80 | 80 | 80 | 80 |
| ENABLE™ 27-03, wt.% | 20 | 20 | 20 | 20 | 20 | 20 | 20 |
| OUTER LAYER A | | | | | | | |
| EXACT ™ 0201, wt.% | 100 | 97.5 | 97.5 | 95 | 90 | 90 | 80 |
| VISTAMAXX™ 6102FL, wt.% | | 2.5 | 2.5 | 5 | 10 | | 20 |
| VISTAMAXX™ 6202F, wt.% | | | | | | 10 | |
| **Layer Distribution** | | | | | | | |
| | 1/2/1 | 1/2/1 | 1/4/3 | 1/4/3 | 1/4/3 | 1/4/3 | 1/4/3 |
| **Film Properties** | | | | | | | |
| Haze, % | 2.1 | 2.2 | 2.2 | 2.5 | 2.4 | 2.4 | 2.1 |
| Gloss 45° | 85.2 | 84.7 | 85.6 | 85.3 | 86.7 | 85.7 | 86.8 |
| **Cling Properties** | | | | | | | |
| Cling force inside/outside, cN | 53 | 106 | 101 | 117 | 136 | 132 | 222 |

In both cases, with higher VISTAMAXX™ concentrations, higher tackiness is achieved. The maximum measurable force using the test as described in the Examples is around 250 cN. Above this value, the values are not representative of the true peel strength.

Figure 1 shows a graphical representation of the Cling Force vs. the VISTAMAXX™ concentration in the plastomer-containing outer layer A as shown in the above Examples. Accordingly, the level of cling force may be controlled by selecting the amount of the propylene-based elastomer in the outer layer A.

Any range of numbers recited in the specification hereinabove or in the claims hereinafter, such as that representing a particular set of properties, units of measure, conditions, physical states or percentages, is intended to literally incorporate expressly herein by reference or otherwise, any number falling within such range, including any subset of numbers or ranges subsumed within any range so recited.

In some embodiments of the invention, the composition is substantially free (i.e., present only at impurity levels or not purposely added to a described composition) of any additive or component not specifically enumerated herein. Advantages described for certain embodiments may or may not be present in other embodiments. Likewise whenever a composition, an element or a group of elements is preceded with the transitional phrase "comprising", it is understood that we also contemplate the same composition or group of elements with transitional phrases "consisting essentially of," "consisting of', "selected from the group consisting of," or "is" preceding the recitation of the composition, element, or elements and vice versa.

## Claims

1. A film for use as a stretch wrap film, cling film or surface protective film, comprising an outer layer A in surface contact with a core layer, the outer layer A comprising a plastomer and from 1.0 to 25.0 wt% of a propylene-based elastomer and the outer layer A containing no more than 0.1 wt.% of a $C_4$-$C_{10}$-based polymer having an Mw < $5.00 \times 10^4$ g/mol, wherein the core layer comprises at least 50 wt% of a polyethylene.

2. The film of claim 1, wherein the plastomer comprises an ethylene-based plastomer comprising 87 mol.% to 97.5 mol.% of polymer units derived from ethylene and 13 mol.% to 2.5 mol.% of polymer units derived from an alpha-olefin, the plastomer having a density of from 0.86 g/cm$^3$ to 0.910 g/cm$^3$, an Mw $\geq$ 70,000 to < 130,000, and a heat of fusion of greater than 75 J/g as determined by differential scanning calorimetry.

3. The film of claim 1 or claim 2, wherein the core layer further comprises 10.0 wt.% to 30.0 wt.% of a further polyethylene.

4. The film of claim 3, wherein the further polyethylene comprises a polyethylene having a melt index of from 0.1 to 15 as determined by ASTM D-1238, condition E, a compositional distribution breadth index as defined in the description of at least 70%, a density of from 0.910 to 0.930 g/ml, a haze value of less than 20% as determined by ASTM D-1003, a melt index ratio I21/I2 of from 35 to 80 as determined by ASTM D1238, an averaged Modulus (M) as defined in the description of from 13790 N/cm$^2$ to 41369 N/cm$^2$ (20,000 to 60,000 psi), and a relation between M and the dart impact strength in g/25.4 $\mu$m (g/mil) (DIS) complying with the formula:

$$DIS \geq 0.8 \times [100+e^{(11.71-0.000268 \times M+2.183 \times 10-9 \times M2)}],$$

where "e" represents 2.7183, the base Napierian logarithm, M is the averaged Modulus in psi and DIS is the 66 cm (26 inch) dart impact strength, as determined by ASTM D-1709.

5. The film of claim 3, wherein the further polyethylene comprises a heterogeneously branched polyethylene comprising at least 85 mol.% of units derived from ethylene and having a density of from 0.910 g/cm$^3$ to 0.940 g/cm$^3$ and a melt index $\leq$ 1.5 g/10 min., as determined according to ASTM D-1238 at 190°C/2.16 kg.

6. The film of any preceding claim, wherein the plastomer has a density of 0.870 g/cm$^3$ to 0.890 g/cm$^3$.

7. The film of any preceding claim, wherein the film is a multilayer blown film further comprising an outer layer B comprising polyethylene, the outer layer B being in surface contact with a surface of the core layer opposite the outer layer A.

8. The film of claim 7, wherein the outer layer B comprises 50.0 wt.% to 100.0 wt.% of a polyethylene having at least 50.0 wt.% ethylene and 1.0 wt.% to 35.0 wt.% of a C$_3$ to C$_{20}$ alpha-olefm comonomer (based upon the weight of the copolymer), a composition distribution breadth index (CDBI) as defined in the description $\geq$ 60%, and a density of 0.910 g/cm$^3$ to 0.950 g/cm$^3$.

9. The film of claim 8, wherein the core layer comprises:

70 wt.% to 90 wt.% of a first polyethylene having at least 50.0 wt.% ethylene and 1.0 wt.% to 35.0 wt.% of a C$_3$ to C$_{20}$ alpha-olefin comonomer (based upon the weight of the copolymer), a composition distribution breadth index (CDBI) as defined in the description $\geq$ 60%, a density of 0.910 g/cm$^3$ to 0.950 g/cm$^3$; and
10.0 wt.% to 30.0 wt.% of a second polyethylene comprising:

i) a polyethylene having a melt index of from 0.1 to 15 as determined by ASTM D-1238, condition E, a compositional distribution breadth index (CDBI) as defined in the description of at least 70%, a density of from 0.910 to 0.930 g/ml, a haze value of less than 20% as determined by ASTM D-1003, a melt index ratio I21/I2 of from 35 to 80 as determined by ASTM D-1238, an averaged Modulus (M) as defined in the description of from 13790 N/cm$^2$ to 41369 N/cm$^2$ (20,000 to 60,000 psi), and a relation between M and the dart impact strength in g/25.4 $\mu$m (g/mil) (DIS) complying with the formula:

$$DIS \geq 0.8 \times [100+e^{(11.71-0.000268 \times M+2.183 \times 10-9 \times M2)}],$$

where "e" represents 2.7183, the base Napierian logarithm, M is the averaged Modulus in psi and DIS is the 66 cm (26 inch) dart impact strength as determined by ASTM D-1709; or
ii) a heterogeneously branched polyethylene comprising at least 85 mol.% of units derived from ethylene and having a density of from 0.910 g/cm$^3$ to 0.940 g/cm$^3$ and a melt index $\leq$ 1.5 g/10 min., as determined according to ASTM D-1238 at 190°C/2.16 kg.

10. The film of claim 8 or claim 9, wherein the outer layer B comprises $\leq$ 0.2 wt.% of a particulate antiblock, based on the total weight of the outer layer B.

11. The film of any preceding claim, wherein outer layer A includes at least 40.0 wt% of an ethylene-based plastomer, based on the total weight of outer layer A.

12. A method of wrapping an article comprising:

attaching an end of a film from a film-roll to the article;
unwinding the film from the film-roll at a rate from 1 to 400 m/min.;
wrapping the article with the film, wherein the total noise associated with unwinding the film is less than $9.0 \times 10^1$ dB measured according to ASTM E2202-02(2009); and
wherein the film is a film according to any one of claims 1 to 11.

**Patentansprüche**

1. Folie zur Verwendung als Stretchfolie, Haftfolie oder Oberflächenschutzfolie, die eine Außenschicht A mit Oberflächenkontakt zu einer Kernschicht enthält, wobei die Außenschicht A ein Plastomer und 1,0 bis 25,0 Gew.-% eines Elastomers auf Propylenbasis enthält und die Außenschicht A nicht mehr als 0,1 Gew.-% eines $C_4$-$C_{10}$-basierten Polymers mit einem $M_w < 5.00 \times 10^4$ g/mol enthält, wobei die Kernschicht mindestens 50 Gew.-% Polyethylen enthält.

2. Folie nach Anspruch 1, wobei das Plastomer ein Plastomer auf Ethylenbasis enthält, das 87 Mol-% bis 97,5 Mol-% von Ethylen abgeleitete Polymereinheiten und 13 Mol-% bis 2,5 Mol-% von einem $\alpha$-Olefin abgeleitete Polymereinheiten enthält und das Plastomer eine Dichte von 0,86 g/cm³ bis 0,910 g/cm³, ein Mw $\geq$ 70.000 bis < 130.000 und eine Schmelzwärme größer als 75 J/g, die mittels Differential-Scanning-Kalorimetrie bestimmt wurde, aufweist.

3. Folie nach Anspruch 1 oder Anspruch 2, wobei die Kernschicht außerdem 10,0 Gew.-% bis 30,0 Gew.-% eines weiteren Polyethylens enthält.

4. Folie nach Anspruch 3, wobei das weitere Polyethylen ein Polyethylen ist, das einen Schmelzindex von 0,1 bis 15, der nach ASTM D-1238 Bedingung E bestimmt wurde, einen in der Beschreibung definierten Breitenindex der Zusammensetzungsverteilung von mindestens 70%, eine Dichte von 0,910 bis 0,930 g/ml, einen Trübungswert von weniger als 20%, der nach ASTM D-1003 bestimmt wurde, ein Verhältnis des Schmelzflussindex I21/I2 von 35 bis 80, das nach ASTM D1238 bestimmt wurde, ein in der Beschreibung definiertes, mittleres Modul (M) von 13790 N/cm² bis 41369 N/cm² (20000 bis 60000 psi) und ein Verhältnis zwischen M und der Dart-Schlagfestigkeit in g/25,4 $\mu$m (g/mil) (DIS) aufweist, das die Formel:

$$\text{DIS} \geq 0,8 \ \times \ [100 + e^{(11,71 - 0,000268 \times M + 2,183 \times 10 - 9 \times M2)}]$$

erfüllt, in der "e" für 2.7183 steht, der Basis des Napier-Logarithmus, M das mittlere E-Modul in psi ist und DIS die 66 cm (26 inch) Dart-Schlagfestigkeit ist, die nach ASTM D-1709 bestimmt wurde.

5. Folie nach Anspruch 3, wobei das weitere Polyethylen ein heterogen verzweigtes Polyethylen enthält, das mindestens 85 Mol-% von Ethylen abgeleitete Einheiten enthält und eine Dichte von 0,910 g/cm³ bis 0,940 g/cm³ und einen Schmelzflussindex $\leq$ 1,5 g/10 Min., der gemäß ASTM D-1238 bei 190 °C/2,16 kg bestimmt wurde, aufweist.

6. Folie nach einem der vorhergehenden Ansprüche, wobei das Plastomer eine Dichte von 0,870 g/cm³ bis 0,890 g/cm³ aufweist.

7. Folie nach einem der vorhergehenden Ansprüche, wobei die Folie eine mehrschichtige Blasfolie ist, die außerdem eine Außenschicht B enthält, die Polyethylen enthält, und die Außenschicht B in Oberflächenkontakt mit einer Oberfläche der Kernschicht entgegengesetzt zur Außenschicht A ist.

8. Folie nach Anspruch 7, wobei die Außenschicht B 50,0 Gew.-% bis 100,0 Gew.-% Polyethylen enthält, das mindestens 50,0 Gew.-% Ethylen und 1,0 Gew.-% bis 35,0 Gew.-% eines $C_3$-bis-$C_{20}$-$\alpha$-Olefin-Comonomers (basierend auf dem Gewicht des Copolymers), einen in der Beschreibung definierten Breitenindex der Zusammensetzungsverteilung (CDBI) $\geq$ 60% und eine Dichte von 0,910 g/cm³ bis 0,950 g/cm³ aufweist.

**9.** Folie nach Anspruch 8, wobei die Kernschicht 70 Gew.-% bis 90 Gew.-% eines ersten Polyethylens, das mindestens 50,0 Gew.-% Ethylen und 1,0 Gew.-% bis 35,0 Gew.-% eines $C_3$- bis $C_{20}$-$\alpha$-Olefin-Comonomers (basierend auf dem Gewicht des Copolymers), einen in der Beschreibung definierten Breitenindex der Zusammensetzungsverteilung (CDBI 60% und eine Dichte von 0,910 g/cm$^3$ bis 0,950 g/cm$^3$ aufweist, und 10,0 Gew.-% bis 30,0 Gew.% eines zweiten Polyethylens enthält, das

i) Polyethylen enthält, das einen Schmelzindex von 0,1 bis 15, der nach ASTM D-1238 Bedingung E bestimmt wurde, einen in der Beschreibung definierten Breitenindex der Zusammensetzungsverteilung (CDBI) von mindestens 70%, eine Dichte von 0,910 bis 0,930 g/ml, einen Trübungswert von weniger als 20%, der nach ASTM D-1003 bestimmt wurde, ein Verhältnis des Schmelzflussindex I21/I2 von 35 bis 80, das nach ASTM D1238 bestimmt wurde, ein in der Beschreibung definiertes, mittleres Modul (M) von 13790 N/cm$^2$ bis 41369 N/cm$^2$ (20000 bis 60000 psi) und ein Verhältnis zwischen M und der Dart-Schlagfestigkeit in g/25,4 $\mu$m (g/mil) (DIS), das die Formel:

$$DIS \geq 0,8 \ x \ [100 + e^{(11,71-0,000268xM+2,183x10-9xM2)}]$$

erfüllt, in der "e" für 2.7183 steht, der Basis des Napier-Logarithmus, M das mittlere E-Modul in psi ist und DIS die 66 cm (26 inch) Dart-Schlagfestigkeit ist, die nach ASTM D-1709 bestimmt wurde, hat oder

ii) ein heterogen verzweigtes Polyethylen enthält, das mindestens 85 Mol-% von Ethylen abgeleitete Einheiten enthält und eine Dichte von 0,910 g/cm$^3$ bis 0,940 g/cm$^3$ und einen Schmelzflussindex $\leq$ 1,5 g/10 Min., der gemäß ASTM D-1238 bei 190 °C/2,16 kg bestimmt wurde, aufweist.

**10.** Folie nach Anspruch 8 oder 9, wobei die Außenschicht B $\leq$ 0,2 Gew.-%, bezogen auf das Gesamtgewicht der Außenschicht B, eines partikelförmigen Antiblockmittels enthält.

**11.** Folie nach einem der vorhergehenden Ansprüche, wobei Außenschicht A mindestens 40,0 0 Gew.-%, bezogen auf das Gesamtgewicht der Außenschicht A, eines Plastomers auf Ethylenbasis enthält.

**12.** Verfahren zum Umwickeln eines Gegenstandes, bei dem ein Ende einer Folie von einer Folienrolle an dem Artikel befestigt wird,
die Folie von der Folienrolle mit einer Geschwindigkeit von 1 bis 400 m/Min. abgewickelt wird,
der Gegenstand mit der Folie umwickelt wird, wobei der mit dem Abwickeln der Folie verbundene Gesamtlärm weniger als 9,0$\times$10$^1$ dB beträgt, gemessen gemäß ASTM E2202-2 (2009), und die Folie eine Folie gemäß einem der Ansprüche 1 bis 11 ist.

**Revendications**

**1.** Film destiné à une utilisation comme film d'enveloppement étirable, film alimentaire ou film de protection de surfaces, comprenant une couche externe A en contact superficiel avec une couche centrale, la couche externe A comprenant un plastomère et de 1,0 à 25,0 % en poids d'un élastomère à base de propylène et la couche externe A ne contenant pas plus de 0,1 % en poids d'un polymère $C_4$-$C_{10}$ ayant une Mw < 5, 00 $\times$ 10$^4$ g/mol, dans lequel la couche centrale comprend au moins 50 % en poids d'un polyéthylène.

**2.** Film selon la revendication 1, dans lequel le plastomère comprend un plastomère à base d'éthylène comprenant de 87 %mol à 97,5 %mol d'unités polymères dérivées d'éthylène et de 13 %mol à 2,5 %mol d'unités polymères dérivées d'une alpha-oléfine, le plastomère ayant une densité de 0,86 g/cm$^3$ à 0,910 g/cm$^3$, une Mw 70 000 à < 130 000, et une chaleur de fusion supérieure à 75 J/g, telle que déterminée par calorimétrie différentielle à balayage.

**3.** Film selon la revendication 1 ou la revendication 2, dans lequel la couche centrale comprend en outre 10,0 % en poids à 30,0 % en poids d'un polyéthylène supplémentaire.

**4.** Film selon la revendication 3, dans lequel le polyéthylène supplémentaire comprend un polyéthylène ayant un indice de fusion de 0,1 à 15, tel que déterminé par la méthode ASTM D-1238, condition E, un facteur de distribution de composition tel que défini dans le descriptif d'au moins 70 %, une densité de 0,910 à 0,930 g/ml, une valeur de voile inférieure à 20 %, telle que déterminée par la méthode ASTM D-1003, un rapport d'indices de fusion I21/I2 de 35 à 80, tel que déterminé par la méthode ASTM D1238, un module moyen (M) tel que défini dans le descriptif de 13 790 N/cm$^2$ à 41 369 N/cm$^2$ (20 000 à 60 000 livres par pouce carré (psi)), et une relation entre M et la résistance au choc à la torpille en g/25,4 $\mu$m (g/millième de pouce) (RCT) conforme à la formule :

$$RCT \geq 0,8 \; x \; [100 + e^{(11,71 - 0,000268 \; x \; M + 2,183 \; x \; 10^{-9} \; x \; M2)}],$$

où « e » représente 2.7183, le logarithme népérien de base, M est le module moyen en psi et RCT est la résistance au choc à la torpille à 66 cm (26 pouces), telle que déterminée par la méthode ASTM D-1709.

5. Film selon la revendication 3, dans lequel le polyéthylène supplémentaire comprend un polyéthylène ramifié de façon hétérogène comprenant au moins 85 %mol d'unités dérivées d'éthylène et ayant une densité de 0,910 g/cm$^3$ à 0,940 g/cm$^3$ et un indice de fusion $\leq$ 1,5 g/10 min, tel que déterminé selon la méthode ASTM D-1238 à 190 °C/2,16 kg.

6. Film selon l'une quelconque des revendications précédentes, dans lequel le plastomère a une densité de 0,870 g/cm$^3$ à 0, 890 g/cm$^3$.

7. Film selon l'une quelconque des revendications précédentes, le film étant un film soufflé multicouche comprenant en outre une couche externe B comprenant un polyéthylène, la couche externe B étant en contact superficiel avec une surface de la couche centrale opposée à la couche externe A.

8. Film selon la revendication 7, dans lequel la couche externe B comprend 50,0 % en poids à 100,0 % en poids d'un polyéthylène contenant au moins 50,0 % en poids d'éthylène et de 1,0 % en poids à 35,0 % en poids d'un comonomère d'alpha-oléfine C$_3$-C$_{20}$ (relativement au poids du copolymère), ayant un facteur de distribution de composition (FDC) tel que défini dans le descriptif $\geq$ 60 %, et une densité de 0,910 g/cm$^3$ à 0,950 g/cm$^3$.

9. Film selon la revendication 8, dans lequel la couche centrale comprend .

70 % en poids à 90 % en poids d'un premier polyéthylène contenant au moins 50,0 % en poids d'éthylène et de 1,0 % en poids à 35,0 % en poids d'un comonomère d'alpha-oléfine C$_3$-C$_{20}$ (relativement au poids du copolymère), ayant un facteur de distribution de composition (FDC) tel que défini dans le descriptif $\geq$ 60 %, une densité de 0,910 g/cm$^3$ à 0,950 g/cm$^3$ ; et
10,0 % en poids à 30,0 % en poids d'un deuxième polyéthylène comprenant .

i) un polyéthylène ayant un indice de fusion de 0,1 à 15, tel que déterminé par la méthode ASTM D-1238, condition E, un facteur de distribution de composition (FDC) tel que défini dans le descriptif d'au moins 70 %, une densité de 0,910 à 0, 930 g/ml, une valeur de voile inférieure à 20 %, telle que déterminée par la méthode ASTM D-1003, un rapport d'indices de fusion I21/I2 de 35 à 80, tel que déterminé par la méthode ASTM D-1238, un module moyen (M) tel que défini dans le descriptif de 13 790 N/cm$^2$ à 41 369 N/cm$^2$ (20 000 à 60 000 livres par pouce carré (psi)), et une relation entre M et la résistance au choc à la torpille en g/25,4 $\mu$m (g/millième de pouce) (RCT) conforme à la formule :

$$RCT \geq 0,8 \; x \; [100 + e^{(11,71 - 0,000268 \; x \; M + 2,183 \; x \; 10^{-9} \; x \; M^2)}],$$

où « e » représente 2.7183, le logarithme népérien de base, M est le module moyen en psi et RCT est la résistance au choc à la torpille à 66 cm (26 pouces), telle que déterminée par la méthode ASTM D-1709 ; ou
ii) un polyéthylène ramifié de façon hétérogène comprenant au moins 85 %mol d'unités dérivées d'éthylène et ayant une densité de 0,910 g/cm$^3$ à 0,940 g/cm$^3$ et un indice de fusion $\leq$ 1,5 g/10 min, tel que déterminé selon la méthode ASTM D-1238 à 190 °C/2,16 kg.

10. Film selon la revendication 8 ou la revendication 9, dans lequel la couche externe B comprends 0,2 % en poids d'un agent anti-adhésion particulaire, relativement au poids total de la couche externe B.

11. Film selon l'une quelconque des revendications précédentes, dans lequel la couche externe A comprend au moins 40,0 % en poids d'un plastomère à base d'éthylène, relativement au poids total de la couche externe A.

**12.** Procédé d'enveloppement d'un article, comprenant :

la fixation d'une extrémité d'un film provenant d'un rouleau de film à l'article ;
le déroulement du film à partir du rouleau de film à une vitesse de 1 à 400 m/min ;
l'enveloppement de l'article avec le film, dans lequel le bruit total associé au déroulement du film est inférieur à 9,0 $\times$10$^1$ dB, mesuré selon la méthode ASTM E2202-02(2009) ; et

dans lequel le film est un film selon l'une quelconque des revendications 1 à 11.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9303093 A
- US 5008204 A
- US 6525157 B
- US 6982310 B
- US 6992158 B
- US 6569965 B
- US 6573350 B
- US 6992159 B
- US 7053164 B
- US 7056982 B
- US 7056992 B
- US 6635715 B
- US 7790281 B
- US 5114763 A
- US 5154981 A
- US 5173343 A
- US 5175049 A
- US 20070260016 A
- US 6476171 B
- US 6255426 B
- US 6368545 B

**Non-patent literature cited in the description**

- **WILD et al.** *J. Poly. Sci., Poly. Phys. Ed.,* 1982, vol. 20, 441